Europäisches Patentamt

(19) European Patent Office

Office européen des brevets

(11) Publication number: **0 045 550**

**A1**

# (12) EUROPEAN PATENT APPLICATION

(21) Application number: 81200849.8

(22) Date of filing: 27.07.81

(51) Int. Cl.³: **G 03 G 15/28**
**G 03 B 27/52**

(30) Priority: 04.08.80 NL 8004430

(43) Date of publication of application:
10.02.82 Bulletin 82/6

(84) Designated Contracting States:
DE FR GB IT NL

(71) Applicant: Océ-Nederland B.V.
St. Urbanusweg 102
NL-5914 CC Venlo(NL)

(72) Inventor: Hovens, Petrus Johannes Petronella
Muntstraat 28
Tegelen(NL)

(74) Representative: Bleukx, Lucas Lodewijk Maria,
Ir. et al,
Océ-Nederland B.V. Patents & Information Dept Postbus
101
NL-5900 MA VENLO(NL)

(54) Conveyor device.

(57) A conveyor device comprising a movable carrier (1) which is provided with two freely-rotatable rollers (3, 4 and 41, 42 respectively), an endless belt (51) or cord (5) which traverses a return loop over each of the two rollers of the carrier, the said return loops are opposite in direction to each other, traverse a straight trajectory (6, 7, 8, 9) parallel to the direction of movement of the carrier and are connected with each other via two rotational paths of which the straight trajectories form a part. The endless belt or cord is provided with driving means (13, 44) on one of the rotational paths and, at the other rotational path it is provided with discon- nectable means (15, 53) for stopping the belt or cord in that rotational path. If the belt is stopped in said rotational path, the carrier moves at one-half the circumferential speed of the two rollers which are mounted to the carrier and so it enables movement of a portion of a photoconductive belt with twice the speed of optical elements mounted on the carrier.

Fig 1

Fig 3

1

CONVEYOR DEVICE

The invention relates to a conveyor device comprising a carrier capable of moving along a straight path, which carrier is provided with two freely-rotatable rollers, a belt or cord which traverses a return loop over each of the two rollers of the carrier, the said return loops being opposite in direction to each other and, adjacent to the rollers, traversing a straight trajectory parallel to the direction of movement of the carrier, and means for driving the belt or cord.

Such a device is known from German patent application 22 26 413, which relates to a device for scanning a document, having mirrors which can be displaced parallel to an exposure plate for the document. That device comprises a carrier which can be moved parallel to the exposure plate along guide rods and which is provided with two freely-rotatable pulleys. A finite belt, the ends of which are attached to two opposite sides of the device, is run in a return loop over a pulley of the carrier, is subsequently guided along a rotational path by means of a drive pulley, and is finally run in a second return loop, which is opposite in direction to the first one, over a second pulley of the carrier. When the drive pulley is driven the carrier is moved at one-half the circumferential speed of this pulley. Mirrors on the carrier are moved in this way at one-half the speed of a mirror which is attached to the belt. For scanning purposes the drive pulley is driven by a motor in one direction, and the drive pulley is driven in the reverse direction in order to retract the mirrors to the original position.

The known conveyor device is not suitable for scanning devices based on one or more rows of small image-forming elements, such as image-forming glass fibres bundled into rows, which in order to form a right-reading image of a stationary original have to be moved past the original at a speed which is exactly one-half that of a continuously moving medium, for example the photoconductive element in a copying machine onto which an image of the document has to be projected. It would then be necessary to have a separate continuously-running motor for the photoconductive belt, in addition to that for the to and fro movement of the scanning device.

The present invention provides a conveyor device by means of which, using a single motor rotating continuously in one direction, firstly elements can be continuously displaced at a certain speed and secondly other elements, as required, can be displaced at exactly one-half the speed, be kept stationary or be retracted at an arbitrarily selected speed to an initial position.

The conveyor device in accordance with the present invention is a device, as mentioned in the preamble, characterised in that the return loops are connected with each other via two rotational paths, of which the straight trajectories form a part, and thus form an endless belt or cord which is driven on one of the rotational paths and at the other rotational path is provided with disconnectable means for stopping the belt or cord in that rotational path.

The terms belt, cord and roller in this application are intended to refer to toothed belts and pulleys, belts and rollers, drive cords and drive wheels, chains and chain wheels and other equivalent embodiments. By return loop around a pulley is meant here that at least a part of the belt approaches the pulley via a certain trajectory and, after n + 1/2 revolutions (where n is zero or a whole number) around the pulley leaves the pulley in the reverse direction.

The invention will now be discussed with the aid of the diagrams.

Fig. 1 is a schematic view of a conveyor device in accordance with the invention.

Fig. 2 is a schematic cross section through a photoconductive belt and a slit exposure device of a copying machine in which the conveyor device in accordance with the invention is employed.

Fig. 3 is a schematic cross section through a copying machine in which an alternative embodiment of the invention is employed.

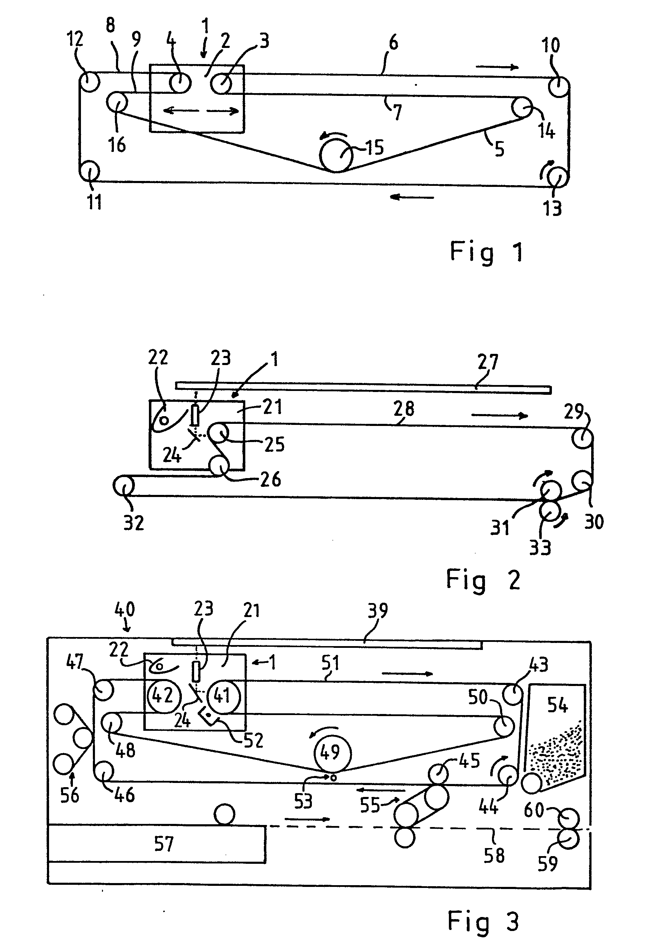

The conveyor device as shown in Fig. 1 comprises a carrier 1 consisting of an initial right-angled plate 2 and a second right-angled plate parallel to the first one. The second plate which is connected by means of connecting rods to the first plate is located at the rear of this first plate and hence is not visible in Fig. 1.

The carrier 1 can move in two directions, denoted by the arrows pointing in opposite directions, in the plane of the plates along guide rods which are not shown. Two freely-rotatable pulleys 3 and 4 are attached close to each other on the plate 2. An endless toothed belt 5 is run in a return loop with two straight trajectories 6 and 7 over the pulley 3 and in an oppositely-directed return loop with two straight trajectories 8 and 9 over the pulley 4. The connection between trajectories 6 and 8 is run in a first rotational path over three diversion pulleys 10, 11 and 12 and over a drive pulley 13. The connection between the straight trajectories 7 and 9 is run in a second rotational path over three diversion pulleys 14, 15 and 16. The diversion pulley 15 is freely rotatably fastened to a drivable shaft close to a frame plate, not shown, in which the drivable shaft is mounted. The diversion pulley 15 is provided with magnetic couplings for fastening the pulley, as required, either on the drivable shaft or on the frame plate.

The drive pulley 13 is driven continuously by means of a motor, so that the belt 5 moves in the direction indicated by the arrows. When pulley 15 is in the freely rotatable state, the carrier 1 remains stationary. (Since as a result of friction in the moving components, the carrier can still to some extent move, a small magnet is provided close to the end positions which maintains the carrier at the end positions). When pulley 15 is held firmly against the frame and thus can no longer rotate, the carrier is pulled away from the small magnet and moves to the right at one-half the speed of the belt in the first rotational path (over pulleys 10, 13, 11 and 12). When pulley 15 is held firmly on its shaft and is driven in the direction shown by the arrow at a greater circumferential speed than pulley 13, then the carrier will move to the left.

4 .

The drive of the belt and the locking of the belt are not necessarily restricted to pulleys 13 and 15. In alternative embodiments of the conveyor device in accordance with the present invention the function of pulley 13 can be taken over by one of the diversion pulleys 10, 11 and 12 and the function of pulley 15 by one of pulleys 14 and 16. In yet a further embodiment in accordance with the invention pulley 15 can be located on the same shaft as pulley 13 and, if required, can rotate freely, be held against the frame, or be locked on the shaft. Since when pulley 13 is locked on the shaft, pulley 15 will rotate in an incorrect direction, the belt must be run in a crossed loop around pulley 15. In a further alternative embodiment pulley 15 is replaced by a clamp, by means of which the belt is held back at desired points in time to permit movement of the carrier to the right. The return movement to the initial position can in this case be executed by means of a scroll spring which is unrolled during movement to the right.

An application of the conveyor device as shown in Fig. 1 in a slit exposure device is explained with the aid of Fig. 2. In Fig. 2 details are given of the second plate 21 of the carrier 1, which is located in Fig. 1 at the rear of the first plate 2.
Between plate 21 and plate 2, which is not shown in Fig. 2, a light source 22, an optical system 23 consisting of a number of rows of image-forming glass fibres, a mirror 24 and above each other two freely-rotatable rollers 25 and 26 are mounted. The carrier 1 can be moved along guide rods, not shown, which run parallel to an exposure plate 27 on which a document to be scanned is laid. A photoconductive belt 28 is run in s-fashion over the two rollers 25 and 26, after roller 25 it traverses an initial straight trajectory parallel to the exposure plate 27, and is subsequently guided around diversion rollers 29, 30, 31 and 32 towards roller 26, whereby the trajectory between the last diversion roller 32 and roller 26 is similarly a straight trajectory parallel to the initial straight trajectory.

A roller 33 located opposite roller 31 presses the photoconductive belt against roller 31. This roller is connected by means of interacting gearwheels to pulley 13 (in Fig. 1), by means of which the photoconductive belt 28 is driven at precisely the same speed as belt 5 (in Fig. 1). (In an alternative embodiment the pulley 13 and the diversion roller 31 can be mounted on the same shaft).

When the pulley 15 in Fig. 1 is held against the frame, the carrier 1 moves to the right at one-half the speed of belt 5 and that of the photoconductive belt 28. In this case an image of a document present on the exposure plate is projected strip-wise onto the photoconductive belt. Projection takes place on a fixed strip on roller 25 where the photoconductive belt passes at the same speed as the carrier along the document on the exposure plate.

In an alternative embodiment of the conveyor device in accordance with the present invention use is not made of a toothed belt, but instead the actual photoconductive belt is used to drive the carrier. This embodiment which is shown in Fig. 3, comprises the carrier 1, the second plate 21 of which which is located at the rear of plate 2 (not shown) is illustrated. The carrier can move to and fro along guide rods, not shown, which run parallel to an exposure plate 39 which is incorporated in the top surface of a copying machine 40. Between plates 21 and 2 two rollers 41 and 42 are mounted beside each other. An endless photoconductive belt 51 is guided over these rollers and further guide rollers 43-50 along a path which is identical with that of the toothed belt 5 in Fig. 1. A corona device 52 for charging up the photoconductive belt, and the exposure system from Fig. 2 consisting of the light source 22, the optical system 23 and the mirror 24 are likewise mounted between plates 21 and 2. The photoconductive belt is driven continuously by way of the roller 44 and moves in the direction indicated by the arrows. The roller 49, like the diversion pulley 15 in Fig. 1, is mounted in freely rotatable fashion on a drivable shaft which is mounted in bearings in frame plates (not shown) of the copying machine. Roller 49 is provided with a magnetic coupling for fastening this roller as required, either on the drivable shaft or against one of the frame plates. Likewise an electromagnetically-actuated cam 53 which can move up and down is attached to both ends of roller 49 on the underside, and this clamps the photoconductive belt slip-free against roller 49 during the periods when the roller is locked against the frame plate.

When roller 49 is in the freely-rotating state, the carrier remains at rest against a small magnetic lock which is located to the left in the copying machine close to the end position. When roller 49 is locked against the frameplate and the cam 53 is clamped against the photoconductive belt, this belt can no longer move at this place and the carrier is moved to the right at one-half the drive speed of the photoconductive belt at the driven roller 44. Then with the aid of the illumination system an image is formed strip-wise of an original laying on the exposure plate 39. The image is projected onto the belt at the location of roller 41. When the original on the exposure plate has been completely scanned, the cam is removed from the photoconductive belt, roller 49 is fastened on its shaft and this shaft is driven in the direction shown by the arrow at the same speed as roller 44. Since roller 49 is larger than roller 44, the circumferential speed is greater and as a result the carrier is retracted to its original position.

The photoconductive belt, after passing the corona device and the exposure system where the latent electrostatic image is formed, consecutively passes a magnetic brush developing system 54 with a binary developing powder located on the right in the copying machine, a transfer station 55 at the bottom of the copying machine where the developed image is transferred onto a belt coated with silicone rubber, and a cleaning station 56 on the left of the copying machine where the photoconductive belt is cleaned with a cloth. The powder image which has been transferred at transfer station 55 to the silicone rubber belt is transferred to a sheet of paper which has been fed from a stock tray 57 arranged on the left inside the copying machine, after which the paper via a route, shown by a dashed line 58, and a pair of feedout rollers 59, 60 leaves the copying machine.

CLAIMS

1. Conveyor device comprising a carrier (1) capable of moving along a straight path, which carrier is provided with two freely-rotatable rollers (3, 4 and 41, 42 respectively), a belt (51) or cord (5) which traverses a return loop over each of the two rollers of the carrier, the said return loops being opposite in direction to each other and, adjacent to the rollers, traversing a straight trajectory (6, 7, 8, 9) parallel to the direction of movement of the carrier, and means for driving (13, 44) the belt or cord, characterised in that the return loops are connected with each other via two rotational paths, of which the straight trajectories form a part, and thus form an endless belt or cord which is driven on one of the rotational paths and, at the other rotational path is provided with disconnectable means (15, 53) for stopping the belt or cord in that rotational path.

2. Conveyor device according to claim 1 characterised in that the disconnectable means (15) comprise drive means with which in the appropriate rotational path the belt can be driven at a greater speed than in the other rotational path.

3. Conveyor device according to claim 2 characterised in that the disconnectable means (15) comprise a driven shaft, a freely-rotatable guide roller for the belt or cord, and a magnetic coupling attached to the guide roller, the said magnetic coupling being capable of being clamped, as required, onto the driven shaft, being locked, or being allowed to rotate freely with the guide roller.

Fig 1

Fig 2

Fig 3

0045550

| | | | |
|---|---|---|---|
| European Patent Office | **EUROPEAN SEARCH REPORT** | Application number EP 81 20 0849 | |

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | <u>FR - A - 2 293 394</u> (H. TAX) <br> * Page 6, lines 19-37; pages 7,8; figure 2 * <br><br> -- <br><br> <u>DE - A - 2 248 193</u> (K.G. HINTER-KOPF) <br> * Pages 11-14; figure 3 * <br><br> -- | 1 <br><br><br><br><br> 1 | G 03 G 15/28 <br> G 03 B 27/52 |
| DA | <u>FR - A - 2 143 774</u> (DECISION CONSULTANTS INC.) <br> * Page 2, lines 19-36; pages 3-5; figures 1-5 * <br><br> ---- | 1 | **TECHNICAL FIELDS SEARCHED (Int. Cl.³)** <br><br> G 03 G 15/28 <br> G 03 B 27/52 <br> B 65 G 21/14 <br> B 66 C 11/16 <br> B 66 C 11/18 <br> B 65 G 1/12 <br> G 03 B 27/62 <br> B 65 G 21/14 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 17-09-1981 | BOEYKENS |

EPO Form 1503.1 06.78